# EUROPÄISCHE PATENTSCHRIFT

(11) **EP 2 501 939 B1**
(45) Veröffentlichungstag und Bekanntmachung des Hinweises auf die Patenterteilung: **04.09.2013**
(21) Anmeldenummer: 10779786.2
(22) Anmeldetag: 16.11.2010
(51) Int. Cl.: F04D 29/12, F16J 15/34

(54) **GLEITRINGDICHTUNGSANORDNUNG FÜR HOHE UMFANGSGESCHWINDIGKEITEN**
SLIDE RING SEAL ARRANGEMENT FOR HIGH CIRCUMFERENTIAL VELOCITIES
ENSEMBLE D'ÉTANCHÉITÉ À BAGUES DE GLISSEMENT POUR VITESSES PÉRIPHÉRIQUES ÉLEVÉES

(30) Priorität: 17.11.2009 DE 102009053360
(43) Veröffentlichungstag der Anmeldung: 26.09.2012
(73) Patentinhaber: KSB Aktiengesellschaft, 67227 Frankenthal (DE)
(72) Erfinder: SPIELVOGEL, Artur, 67246 Dirmstein (DE)
(86) Internationale Anmeldenummer: PCT/EP2010/067551
(87) Internationale Veröffentlichungsnummer: WO 2011/061175

(56) Entgegenhaltungen:
- EP-A2- 0 845 622
- WO-A1-98/54469
- DE-A1- 2 233 381
- DE-A1- 2 614 884
- DE-A1- 19 946 219

## Beschreibung

Die Erfindung betrifft eine Gleitringdichtungsanordnung für hohe Umfangsgeschwindigkeiten zur Abdichtung von flüssigen Fluiden mit geringer bis fehlender elektrischer Leitfähigkeit, wie salzarmes Kesselspeisewasser bei Kesselspeisewasserpumpen oder dgl., mit mindestens einem Paar Gleitringe, von denen einer drehunbeweglich und der andere zur gemeinsamen Drehung mit einem rotierenden Bauteil montierbar ist, welche zusammenwirkende Gleitflächen aufweisen, die im Betrieb zwischen sich einen mit dem abzudichtenden Fluid beaufschlagbaren Bereich der Gleitringdichtungsanordnung gegenüber einem Umgebungsbereich abdichtenden Dichtspalt bilden, wobei einer der Gleitringe im wesentlichen aus einem Material mit guter elektrischer Leitfähigkeit und der andere Gleitring im wesentlichen aus einem Material mit geringer elektrischer Leitfähigkeit gebildet ist, wobei die Gleitringdichtungsanordnung in einem Dead-end Zirkulationskreislauf eines abzudichtenden rotierenden Bauteiles angeordnet ist und mit einem einen Filter aufweisenden Kühlsystem verbunden ist.

Das primäre Anwendungsgebiet der Erfindung betrifft Kesselspeisewasserpumpen, wobei ein zu förderndes Kesselspeisewasser häufig Temperaturen von bis zu 200°C besitzt und im Allgemeinen im voll entsalzten Zustand befindlich ist. Um die in solchen Kesselspeisewasserpumpen eingesetzten Gleitringdichtungen vor Überhitzungen zu schützen, sind solche Dichtungssysteme mit einer Kühlung versehen. Ein solches Gleitringdichtungssystem ist in der Burgmann Konstruktionsmappe 15.3, Gleitringdichtungen, Ausgabe vom 13.10.2005 auf Seite 129 in der linke 1. Spalte offenbart. Die Gleitringdichtung ist entsprechend API 682 oder ISO 21049 mit einem Zirkulationssystem als so genanntes Dead-end nach Plan 23 ausgeführt, vgl. auch Seite 97 der Konstruktionsmappe. Dieses Zirkulationssystem sieht für eine abzudichtende Pumpenwelle eine Gleitringdichtungsanordnung vor, die mit einem eigenen Wärmetauscher verbunden ist. Zum Schutz der Gleitringdichtung sind in einer abführenden Kühlleitung in einem 2-strängigen Abschnitt zwei Magnetfilter angeordnet, mit deren Hilfe metallische Verunreinigungen im Zirkulationskreislauf der Gleitringdichtung abgefangen werden. Dieses Dichtungssystem ist entkoppelt vom eigentlichen Speisewasserkreislauf der Pumpe, weshalb sich dafür der Begriff Dead-end eingebürgert hat. Im Zirkulationskreislauf ist der Wärmetauscher in einfacher Weise an ein externes Kühlsystem angeschlossen, so dass die Gleitringdichtung einen eigenen geschlossenen Schmier- und Kühlkreislauf besitzt. Damit wird für die Gleitringdichtung die Einhaltung einer Betriebstemperatur von unter 100° C ermöglicht.

Solche Gleitringdichtungen sind einem Fördermedium ausgesetzt, das eine sehr geringe elektrische Leitfähigkeit aufweist, < 1 µS/cm. Zusätzlich sind sie sehr hohen Umfangsgeschwindigkeiten ausgesetzt, häufig über 40 m/sec, wodurch bei ungünstigen Betriebsparametern Schädigungen der Gleitringdichtungen nach relativ kurzen Betriebszeiten auftreten.

EP 0845 622 B1 offenbart eine Gleitringdichtungsanordnung nach dem Oberbegriff des Anspruchs 1.

Bei diesen Gleitringdichtungsanordnungen für deren Gleitringpaarung eine Materialkombination aus Siliziumkarbid und Kohlenstoff besteht, treten durch das salzfrei aufbereitete und auch im Zirkulationskreislauf benutzte Kesselspeisewasser auf Grund der hohen Umfangsgeschwindigkeiten häufig Zerstörungen im Bereich des Siliziumkarbidringes auf. Zu deren Vermeidung wird vorgeschlagen, die durch die hohe Umfangsgeschwindigkeit bedingte elektrische Aufladung am schlecht leitenden Siliziumkarbidring vom Umfangsbereich des rotierenden Gleitringes an die Umgebung, insbesondere an ein Pumpengehäuse, abzuleiten. Zu diesem Zweck wird der stillstehende, im Gehäuse befindliche Gleitring mit einer leitfähigen Beschichtung versehen, um somit eine Potenzialbildung im Bereich der Gleitringdichtung zu vermeiden..

Die DE 26 14 884 zeigt eine Gleitringdichtung, die mit Kapillaren zur Kühlung durchsetzt ist und über einen Wärmetauscher gekühlt wird.

Die WO 98/54469 zeigt eine Gleitringdichtung mit einer Sperrflüssigkeit, die mit Hilfe verschiedener Sensoren Parameter innerhalb der Sperrflüssigkeit bestimmt, die auf eine Leckage einer ersten Dichtung schließen lassen.

Die DE 22 33 381 zeigt die Kühlung einer Gleitringdichtung, die aus unterschiedlichen Materialien aufgebaut Wärmeausdehnungseffekte selbsttätig kompensieren kann.

Einen vergleichbaren Weg zeigt die DE 199 46 219 A1 auf, bei der zur Verbesserung der Lebensdauer vorgeschlagen ist, ein sich beim Betrieb an der Gleitringdichtung aufbauendes elektrisches Potenzial von der Welle der Pumpe abzugreifen und auf einen Erdungspunkt abzuleiten. Dies soll mit Hilfe eines Schleifringsystems erfolgen, wobei das elektrische Potenzial direkt von den Ringen der Gleitringdichtung abgegriffen wird. Eine solche Lösung mag vielleicht in bestimmten Einzelfällen funktionieren, sie bedingt jedoch einen unmittelbaren mechanischen Eingriff im Bereich der Gleitringdichtung, wodurch weitere Störungen und Undichtigkeiten entstehen können.

Des Weiteren erwähnt die DE 199 46 219 A1 als Stand der Technik in deren Beschreibungseinleitung die Verwendung von aufwändigen Dosiereinrichtungen an den Gleitringdichtungen, die im Bereich der Gleitringdichtung alkalisierende bzw. sauerstoffbindende Chemikalien einbringen. Derartige Dosiereinrichtungen sind getrennt vom Wasser-, Dampf-Kreislauf eines Kraftwerksblockes und wirken nur auf den separaten Zirkulationskreislauf der im Dead-end angeordneten Gleitringdichtung ein. Diese ausgeführten Dosiereinrichtungen, die als eine zusätzliche Dosierstation ausgebildet sind, sehen für die Gleitringdichtung eine alkalische Fahrweise vor. Sie weisen Chemikalienbehälter auf, mehrere Dosierpumpen mit Überströmventilen, zusätzliche Dosierstränge mit darin angeordneten Magnetventilen und Absperrventilen sowie mehrere Leitfähigkeitsregler und eine Vielzahl von Messsonden zum Einbau in den Kreislauf. Abweichungen vom zulässigen Betriebszustand werden mittels einer Alarmeinrichtung signalisiert. Diese Dosiereinrichtung speist in den Zirkulationskreislauf Ammoniak und gelegentlich auch zusätzlich noch ein Bindemittel für Sauerstoff ein. Dies bedingt neben der komplexen Verrohrung auch eine permanente, komplexe chemische Kontrolle des Wasser- oder Fluidzustandes im Dead-end. Solche Dosiereinrichtungen oder Dosierstationen sind mit hohen anlagentechnischen und finanziellen Aufwendungen verbunden, bedingen einen erheblichen Überwachungsaufwand und beinhalten das Risiko der Störanfälligkeit.

Der Erfindung liegt das Problem zu Grunde, bei vollentsalzten Fluiden ausgesetzten und mit hoher Umfangsgeschwindigkeit betriebenen Gleitringdichtungen eine Verbesserung der Lebensdauer zu erreichen, ohne hierzu in aufwändiger anlagentechnischer Weise oder durch Änderungen der Gleitringdichtung tätig zu werden und zusätzlich für bereits eingebaute Gleitringdichtungen eine einfache Möglichkeit zur nachträglichen Verbesserung zu schaffen.

Die Lösung dieses Problems sieht vor, dass im Zirkulationskreislauf ein die elektrische Leitfähigkeit der Flüssigkeit erhöhendes Dosiermittel angeordnet oder damit verbunden ist, wobei die elektrische Leitfähigkeit auf einen Wert von 3 - 500 µS/cm eingestellt wird. Erfindungsgemäß wurde erkannt, dass damit in einfachster Weise eine selektive Korrosion an dem nicht leitenden oder sehr schlecht leitenden SiC- oder SiliziumkarbidRing der Gleitringdichtung äußerst zuverlässig vermieden wird. Es wurde erkannt, dass bei den in einer solchen Gleitringdichtung im Dichtungsbereich erreichbaren Umfangsgeschwindigkeit gleich oder größer 45 m/sec und bei einem Betrieb mit ausschließlich im Zirkulationskreislauf erhöhten elektrischen Leitfähigkeit des Fluids auf den vorgeschlagenen Wertebereich von 3 bis 500 µS/cm eine selektive Korrosion an der Gleitringdichtung zuverlässig vermieden wird. Der untere Wert dieser elektrischen Leitfähigkeit von 3 µS/cm liegt um ein Vielfaches unter dem der üblichen Leitungswasser-Leiteigenschaften. Der obere Wert von 500 µS/cm entspricht lediglich dem Wert vom üblichen Leitungswasser. Infolgedessen ist dadurch eine Gefährdung einer Gleitringdichtung nicht eingetreten.

An einem Versuchsaufbau hat sich eine Erhöhung der elektrischen Leitfähigkeit nur im Zirkulationskreislauf einer Speisepumpe auf einen Bereich von 3 µS/cm bis 250 µS/cm als erfolgreich erwiesen. Mit Hilfe einer solchen Leitfähigkeitserhöhung ist bei diesen Gleitringdichtungen eine Erhöhung von deren Betriebsdauer größer 25.000 Betriebstunden möglich.

Mittels weiterer Versuche wurde festgestellt, dass eine Einstellung der elektrischen Leitfähigkeit auf den niedrigeren Bereich von 3 µS/cm bis 50 µS/cm ausreichend ist und gleichzeitig eine erhebliche Reduzierung des Dosiermittels ermöglicht. Die Ergebnisse von zum Anmeldezeitpunkt laufenden Versuchen lassen keine Verminderung der Betriebsdauer erkennen. Eine solche Verbrauchsreduzierung des Dosiermittels ist vorteilhaft möglich durch dessen portionsweise Zugabe oder Einspeisung in den Zirkulationskreislauf. Dieses kann in flüssiger bis fester Form geschehen, beispielsweise mittels selbstauflösender Granulate, tablettenähnlich portionierter Teilmengen, kristalliner Portionen, Pastenmengen und/oder Kombinationen davon. Mit Hilfe eines Magnetventils ist die Zugabe des Dosiermittels steuerbar. Dieses gelangt durch eine temporäre, portionsweise Abgabe aus einem Depotraum oder durch eine temporäre Verbindung von Depotraum mit dem Zirkulationskreislauf in denselben. Dabei würde auch ein osmotischer Druck die Dosierung ermöglichen.

Es kann in einfachster Weise im Bedarfsfall eine Umrüstung an bereits bestehenden Dichtungskreisläufen erfolgen oder künftige Einsatzfälle können mittels einer einfachen Bauteiländerung für solche die Betriebsdauer vervielfachende Zwecke ertüchtigt werden. In vorteilhafter Weise ist der Depotraum als eine austauschbare Patrone ausgebildet. Eine solche Ausbildung ermöglicht einen Dosiermitteleintrag unter Luftabschluss und reduziert somit die Einflüsse vom Luftsauerstoff auf den Zirkulationskreislauf und dessen elektrischen Leitfähigkeit.

Bei dem Dosiermittel kann es sich um ein ein- oder mehrteiliges Salzdepot handeln, welches in einfachster Weise in einer Aufnahme eines im Zirkulationskreislauf befindlichen Bauteiles angeordnet ist. Diese kann auch auswechselbar ausgebildet sein. Eine Ausgestaltung sieht dazu vor, die Aufnahme als ein Deckelteil mit integriertem oder verbundenem Depotraum auszubilden, wobei mindestens eine Abgabeöffnung den Depotraum mit dem Zirkulationskreislauf verbindet. So könnte ein Deckel eines Filters mit einem Salzdepot ausgerüstet sein, wodurch auf Grund der internen Zirkulation eine Aufkonzentrierung und damit im Bereich der Gleitringdichtung eine Erhöhung der elektrischen Leitfähigkeit innerhalb des Zirkulationskreislaufes erfolgt. Die jeweils notwendige Konzentratmenge lässt sich leicht in einfacher Weise auf Grund der bekannten, im Zirkulationskreislauf zirkulierenden Flüssigkeitsmenge ermitteln. Infolge der ebenfalls bekannten Leckagemengen solcher Dichtungen ist einfach festlegbar, wie viel von dem die Leitfähigkeit erhöhenden Mittel nachgespeist werden muss, um einen einmal eingestellten Wert bei zu behalten. In einer solchen Gleitringdichtungsanordnung wird eine auftretende Leckagemenge durch einen Nachfluss aus dem Speisekreislauf der Pumpe ersetzt.

Eine weitere Ausgestaltung sieht hierzu vor, dass eine osmotische Membran die Abgabemenge durch die Abgabeöffnung steuert. Auf Grund von deren geringen Abgabemenge kann somit über einen sehr langen Betriebszeitraum eine einmal eingestellte Leitfähigkeit im Zirkulationskreislauf auf gewünschte Werte gehalten werden.

Eine andere Ausgestaltung sieht eine Leitfähigkeitsmesseinrichtung vor, wodurch gemessen am Leckagestrom der Gleitringdichtungsanordnung, kontinuierlich oder periodisch die elektrische Leitfähigkeit außerhalb der Gleitringdichtung ermittelt wird. Auch innerhalb der Gleitringdichtung oder im Zirkulationskreislauf ist eine solche Leitfähigkeitsmessung möglich. Der jeweils zu betreibende Aufwand steht im Ermessen eines Betreibers einer solchen Anlage, der den Messort in einer bestehenden Anlage ausgewählt hat.

Bei einer Leitfähigkeit von 3 µS/cm oder bei einem Absinken der Leitfähigkeit unter einen Mindestwert im Bereich von 3 µS/cm bis 50 µS/cm genügt ein einfacher Ersatz des als Dosiermittel wirkenden Salzdepots oder um eine erneute Zudosierung einer Dosiermittelportion, um den gewünschten betriebssicheren Zustand wieder zu erlangen. Dies kann auf Grund der Anzeige von oder auf Grund eines Alarms durch die Leitfähigkeitsmesseinrichtung erfolgen. Ebenso kann die Leitfähigkeitsmesseinrichtung die Zugabe des Dosiermittel direkt oder indirekt steuern. Innerhalb eines Zirkulationskreislaufs einer solchen Gleitringdichtungsanordnung sind zu deren Schutz zusätzliche Filter, häufig Magnetfilter, angeordnet, die mit Hilfe von Absperrarmaturen für Wartungszwecke vom Zirkulationskreislauf separiert werden können. Bei diesen üblichen Filtern bietet sich die Anordnung eines Einsatzes für ein Dosiermittels an. Ebenso kann ein Filter, Kühler oder ähnlich leicht zugängliches Bauteil als Dosiermittel Verwendung finden. Somit ist während des laufenden Betriebs ein problemloser Austausch oder eine Erneuerung des die Leitfähigkeit verbessernden Dosiermittels möglich. Ebenso können an anderen im Zirkulationskreislauf befindlichen Bauteilen durch einfachen Austausch oder eine zusätzliche Anbringung von Teilen ein Einspeisepunkt und/oder Depotraum für die Dosiermittel und/oder Anschlüsse für eine Leitfähigkeitsmessung vorgesehen werden. Eine Leitfähigkeitsmesseinrichtung ermittelt und steuert kontinuierlich oder periodisch die elektrische Leitfähigkeit, die für den sicheren Betreib der jeweiligen Gleitringdichtung in einer Anlage eingestellt wurde.

Im Normalbetrieb von Pumpe und der im Dead-end befindlichen Gleitringdichtungsanordnung existiert in den Kreisläufen ein Gleichgewichtszustand, auf Grund dessen dazwischen kein Austausch von Speisewasser erfolgt. Treten während des Betriebs im Kühl- oder Zirkulationskreislauf übliche Leckagen auf, so wird eine solche Leckagemenge aufgefüllt oder nachgespeist mit einer analogen Menge von nachströmendem Speisewasser geringster elektrischer Leitfähigkeit aus dem Pumpenraum. Durch das im Zirkulationskreislauf vom Dead-end zirkulierende Fluid und dessen zugeordneten Dosiermittel wird die niedrigere elektrische Leitfähigkeit des nachströmenden Fluid bzw. Speisewasser auf den notwendigen Wert von mindestens 3 µS/cm erhöht. Damit wird die Lebensdauer solcher durch die hohen Umfangsgeschwindigkeiten hoch belasteten Gleitringdichtung um ein Vielfaches verlängert und somit die Betriebssicherheit und Verfügbarkeit von damit ausgestatteten Kraftwerken entscheidend verbessert.

Eine andere Lösung sieht hierzu vor, dass an den Zirkulationskreislauf ein Dosiermittel in Form einer Dosiermitteleinspeiseeinrichtung angeschlossen ist, deren Speisemenge in Abhängigkeit von einer Gleitringdichtungsleckage die elektrische Leitfähigkeit des Fluid auf einen Wert im Bereich von 3 bis 500 µS/cm einstellt. Nach Weiterungen wird die elektrische Leitfähigkeit auch auf einen Bereich von 3 µS/cm bis 250 µS/cm oder von 3 µS/cm bis 50 µS/cm eingestellt. Dies ist abhängig von den jeweiligen Gegebenheiten einer Gleitringdichtung und deren Zirkulationskreislauf. Ein solches Dosiermitteleinspeisesystem kann ein Pufferspeicher oder eine einfache Kolbenpumpe sein. Deren Zufuhrleitungen sind an einer Armatur, einem Filterelement oder an anderer Stelle des Kreislaufes angeschlossen. Ein solches System gleicht eventuelle Leckageverluste ebenfalls mit aus, und hält dabei gleichzeitig die Leitfähigkeit des Zirkulationskreislaufes auf einen eingestellten Wert.

Ein Rückströmen vom Zirkulationskreislauf zurück in die Speisepumpe verhindert die konstruktive Dead-end Ausbildung. Somit kann in einfachster Weise und ohne aufwändigen anlagentechnischen Installationen und Überwachungseinrichtungen für schnelllaufende Gleitringdichtungen mit Umfangsgeschwindigkeiten größer 40m/sec durch die gezielte Beibehaltung der elektrischen Leitfähigkeit gleich oder größer 3 µS/cm eine selektive Korrosion am Siliziumkarbidring zuverlässig vermieden werden. Mit Hilfe dieser Lösung wird die Betriebszeit einer Gleitringdichtung vervielfacht.

Ebenso kann mit einer weiteren Ausgestaltung die Leitfähigkeitsmesseinrichtung bei einem Überschreiten eines oder mehrerer vorgegebener Messwerte einen Alarm auslösen.

Ein Ausführungsbeispiel der Erfindung ist in Zeichnungen dargestellt und wird im Folgenden näher beschrieben. Dabei zeigen:
- Fig. 1:: ein Dichtungssystem mit Kühlung nach Burgmann Konstruktionsmappe,
- Fig. 2 & 3:: die Dosiermittel für eine Gleitringdichtungsanordnung im Dead-end,
- Fig. 4:: eine Leitfähigkeitsmesseinrichtung und
- Fig. 5:: die Dosiermittel analog Fig. 3 mit Magnetventil und Leitfähigkeitsmesseinrichtung

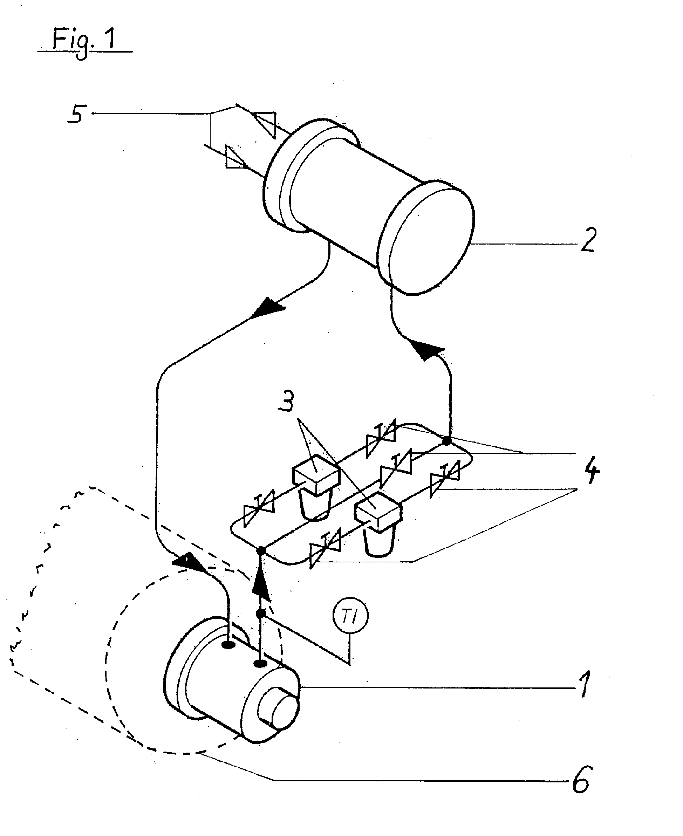

Der in Fig. 1 dargestellte Stand der Technik zeigt eine Gleitringdichtungsanordnung mit Kühlung, wie sie durch die Burgmann Konstruktionsmappe 15.3, Gleitringdichtungen, bekannt ist. Mit die Durchströmrichtung anzeigenden Pfeilen gekennzeichnete Leitungen stellen einen Zirkulationskreislauf zwischen einem Dichtungsgehäuse 1 und einem Wärmetauscher 2 dar. Ein hindurchströmendes Dichtungsfluid fließt dabei durch zwei parallel angeordneten Filter 3 und 3, mit deren Hilfe werden eventuelle Feststoffe abgefangen und nur gereinigtes Dichtungsfluid zum Wärmetauscher 2 geführt, von dem aus es im kühleren Zustand zum Dichtungsgehäuse 1 zurück strömt. Mit Hilfe von Absperrarmaturen 4 können die Filter 3 in den Zirkulationskreislauf zu- oder abgeschaltet werden. Der Wärmetauscher 2 kann in einfachster Weise an ein in einem Kraftwerk befindliches einfaches Kühlwassersystem 5 angeschlossen werden. Aufwändige Überwachungs-Einrichtungen sind hierzu nicht erforderlich. Auf Grund dieser einfachen Kühlmöglichkeit für den als Dichtungsfluid dienenden Anteil vom Speisewasser sowie einer nicht stattfindenden Rückströmung in die nur schematisch und gestrichelt dargestellte Pumpe 6 ist ein solches Dichtungssystem mit der Bezeichnung "Dead-end" bekannt.

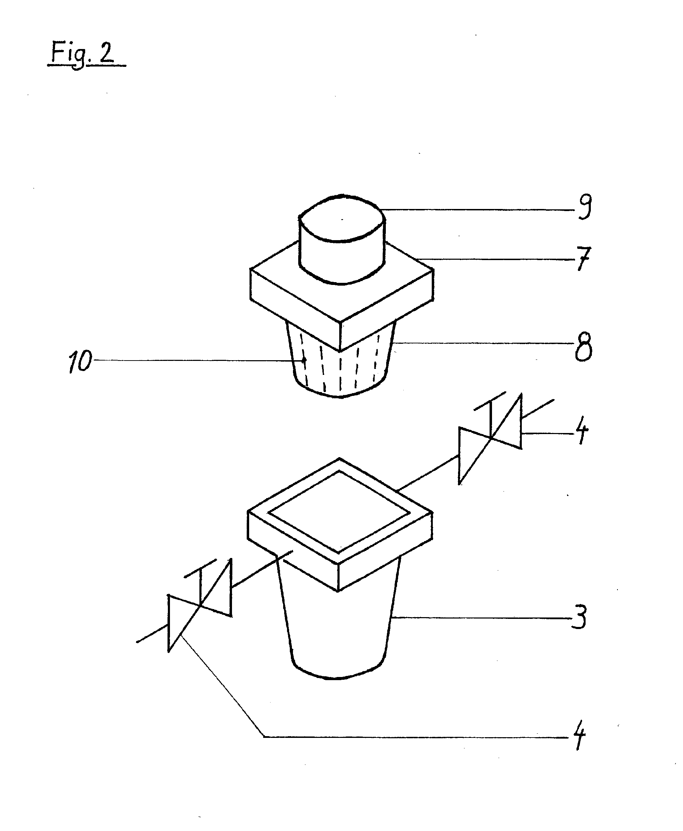

Die Fig. 2 zeigt eine erfindungsgemäße Lösung. Dazu sind in einem Bauteil des Zirkulationskreislaufes, hier zum Beispiel im Deckel 7 der Filter 3, Depoträume 8, 9 angeordnet, in denen ein die elektrische Leitfähigkeit des Dichtungsfluids erhöhendes Mittel befindlich ist, häufig ein Salz. Der Depotraum 8 kann als ein innerer Einsatz und der Depotraum 9 als ein äußerer Ansatz ausgebildet sein. Dies ist abhängig von der Bauart des Bauteiles. Mindestens eine Abgabeöffnung 10 verbindet den Depotraum 8,9 mit dem Zirkulationskreislauf. Ein solcher Depotraum kann als ein zusätzliches Element mit dem Deckelteil verbunden sein, beispielsweise durch eine Schraub- oder eine Steckverbindung. Ebenso kann ein vorhandener Deckel durch einen anderen Deckel mit integriertem Depotraum ersetzt werden. Auf Grund der permanenten Zirkulation des Dichtungsfluids innerhalb des Filters oder einem der anderen Bauteile 1, 2, 3, 4 des Zirkulationskreislaufes wird mit Hilfe des Dosiermittels die elektrische Leitfähigkeit auf einen Wert von 3 bis 500 µS/cm eingestellt und vermeidet somit eine selektive Korrosion auf Grund eines Spannungspotenzials im Bereich der innerhalb des Dichtungsgehäuses 1 befindlichen und deshalb nicht dargestellten Gleitringdichtung.

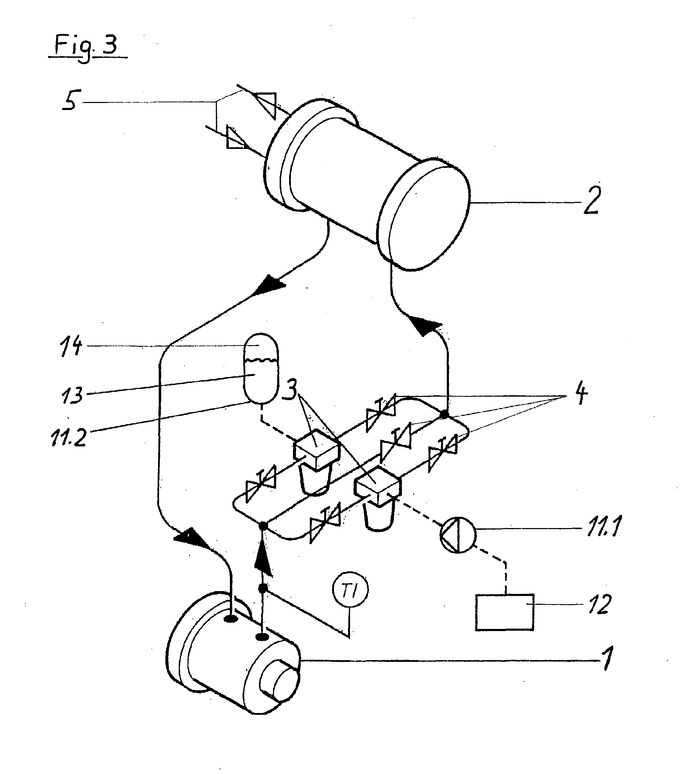

Fig. 3 zeigt eine Dosiermitteleinspeiseeinrichtung, die an unterschiedlichen Stellen des Zirkulationskreislaufes anschließbar ist. Die verschiedenen Anschlussmöglichkeiten sind mit Hilfe der gestrichelten Linien dargestellt. Die Temperatur im Zirkulationskreislauf wird mit einem Temperaturmessgerät TI überwacht. Die Dosiermitteleinspeiseeinrichtung 11.1 ist hierbei als eine Pumpe 11.1, beispielsweise eine einfache Kolbenpumpe für flüssige oder feste Dosiermittel ausgebildet, die aus einem hier extern angeordneten Depotraum 12 fördert. Ebenso kann ein Pufferspeicher eine Dosiermitteleinspeiseeinrichtung 11.2 bilden. Er benutzt einen Depotraum 13, der unter dem Einfluss eines Druckpolsters 14 die Einspeisung des Dosiermittels gewährleistet.

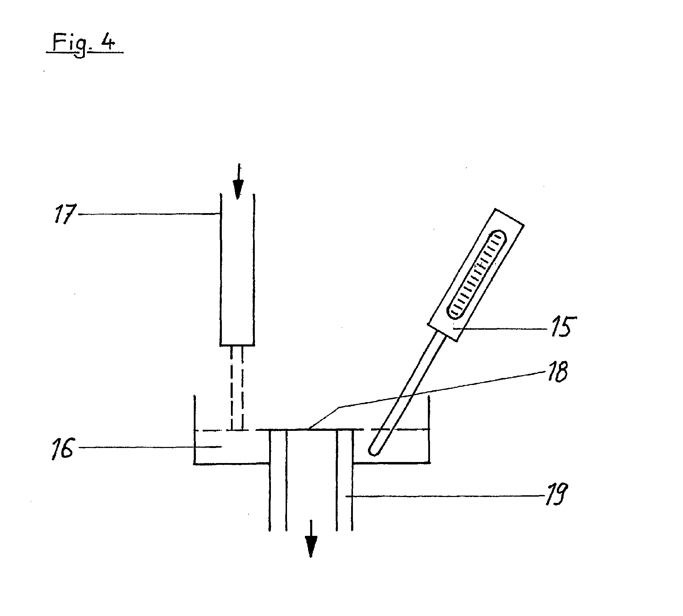

Eine alternative Lösung zeigt die Ausgestaltung der Fig. 3, bei der mit einem einfachen Anschlussstück eine Dosiermittelspeiseeinrichtung auf den Zirkulationskreislauf einwirkt. Dessen Einspeiseleistung liegt in der Größenordnung einer möglichen Dichtungsleckage von gleich/kleiner 1 Liter/Stunde. Hierbei kann es sich um einen Druckspeicher oder um eine einfache Dosierpumpe handeln, deren Fördermenge auf eine Dichtungsleckage eingestellt ist. Somit genügt es, wenn diese Dosiermittelspeiseeinrichtung bei eingestellter Leitfähigkeit nur noch eine Leckagemenge nachspeist und mit deren Hilfe das Leitfähigkeitsniveau der Kühlflüssigkeit gewährleistet. Eine Leitfähigkeitsmesseinrichtung 15 von Fig. 4 kann dies auch steuern.

Fig. 4 zeigt schematisch eine Leitfähigkeitsmesseinrichtung 15, die in Wirkverbindung mit einem Leckagesammelraum 16 der Gleitringdichtungsanordnung steht. Der Leckagesammelraum 16 kann innerhalb oder außerhalb des Dichtungsgehäuses 1 angeordnet sein. Von einem Dichtungsspalt der hier nicht dargestellten Gleitringdichtung strömt eine minimale Leckage über eine Leitung 17 in den Leckagesammelraum 16. Darin kann die Leitfähigkeit gemessen werden. Die Höhe des Flüssigkeitsspiegels vom Leckagevolumen bestimmt in diesem Beispiel die Höhenlage einer Einlauföffnung 18 von einer Ablaufleitung 19.

Mit Hilfe einer Leitfähigkeitsmessung im Bereich eines Leckagesammelraumes einer Gleitringdichtung wird in einfachster Weise am Dichtungsgehäuse 1 die Leitfähigkeit des Dichtungsfluids kontrolliert. Ein Absinken der Leitfähigkeit deutet auf einen Verbrauch des Dosiermittels hin. Somit kann im laufenden Betrieb, z. B. durch Schließen von Absperrarmaturen 4 vor und hinter einem der Filter 3, wie er in Fig. 2 dargestellt ist, dieser mit einer neuen Portion von Dosiermittel versehen werden, um anschließend diesen Filter wieder in den Kreislauf aufzunehmen. Ebenso ist es möglich, einen vorbereiteten, mit Dosiermittel ausgestatteten zweiten Filter vom Kreislauf abgesperrt zu halten. Bei einer Dosiermittelergänzung wird der erste Filter mit dem geleerten Depotraum vom Zirkulationskreislauf getrennt und stattdessen der vorbereitete zweite Filter in den Zirkulationskreislauf zugeschaltet.

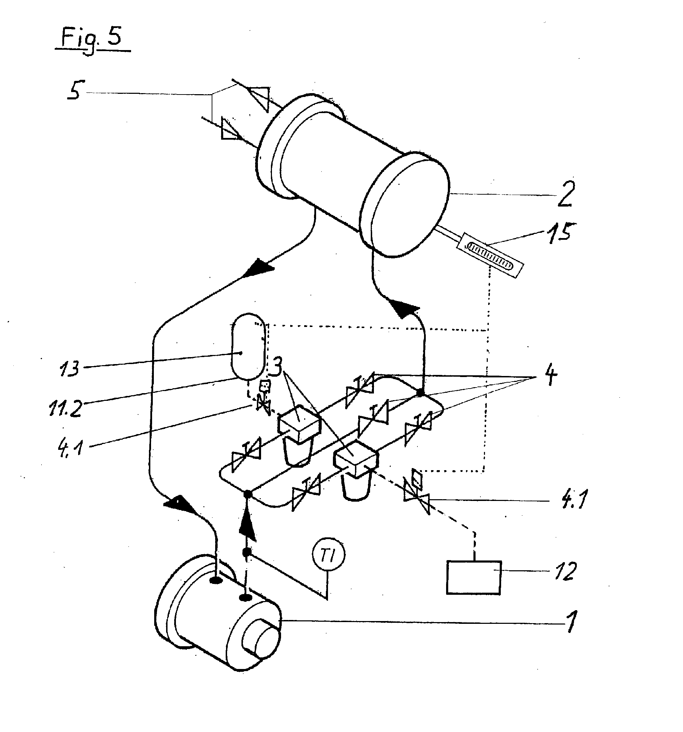

Fig. 5 zeigt eine andere Dosiermitteleinspeiseeinrichtungen analog der Darstellung von Fig.3, die an unterschiedlichen Stellen des Zirkulationskreislaufes anschließbar ist. Die verschiedenen Anschlussmöglichkeiten sind mit Hilfe der gestrichelten Linien dargestellt. Die Temperatur im Zirkulationskreislauf wird mit einem Temperaturmessgerät TI überwacht. Die Dosiermitteleinspeiseeinrichtung von Fig. 3, eine Pumpe 11.1, ist in Fig. 5 durch ein Magnetventil 4.1 gebildet. Damit wird aus dem auf Niederdruck ausgelegten Vorratsbehälter 12 die jeweils benötigte Menge, Portion, Dosis oder dergleichen an Dosiermittel entnommen. Es sind auch Kombinationen der in Fig. 3 und 5 gezeigten Ausbildungen möglich. Ein die Dosiermitteleinspeiseeinrichtung 11.2 bildender Pufferspeicher kann auch als auswechselbare Patrone gestaltet sein. Eine Entleerung von dessen Depotraum 13 registriert die Leitfähigkeitsmesseinrichtung 15, die hier direkt mit dem Zirkulationskreislauf der Gleitringdichtung verbunden ist. Im Ausführungsbeispiel erfolgt dies am Kühler 2, wobei auch andere einfache Einbau- oder Verbindungsstellen möglich sind. Auch zwischen Zirkulationskreislauf und der auswechselbaren Patrone als Dosiermitteleinspeiseeinrichtung 11.2 kann ein Magnetventil 4.1 als Dosiermittel angeordnet sein. Innerhalb der Patrone kann sich das Dosiermittel in jeder für eine Zudosierung geeigneten Form befinden. Die Leitfähigkeitsmesseinrichtung 15 kann die Zugabe von Dosiermittel direkt oder indirekt steuern. Deren Verbindung mit den verschiedenen Dosiermitteln ist durch punktierte Verbindungslinien angedeutet.

## Patentansprüche

1. Gleitringdichtungsanordnung für hohe Umfangsgeschwindigkeiten zur Abdichtung von flüssigen Fluiden mit geringer bis fehlender elektrischer Leitfähigkeit, wie salzarmes Kesselspeisewasser bei Kesselspeisewasserpumpen oder dgl., mit mindestens einem Paar Gleitringe, von denen einer drehunbeweglich und der andere zur gemeinsamen Drehung mit einem rotierenden Bauteil montierbar ist, welche zusammenwirkende Gleitflächen aufweisen, die im Betrieb zwischen sich einen mit dem abzudichtenden Fluid beaufschlagbaren Bereich der Gleitringdichtungsanordnung gegenüber einem Umgebungsbereich abdichtenden Dichtspalt bilden, wobei einer der Gleitringe im wesentlichen aus einem Material mit guter elektrischer Leitfähigkeit und der andere Gleitring im wesentlichen aus einem Material mit geringer elektrischer Leitfähigkeit gebildet ist, wobei die Gleitringdichtungsanordnung einen Dead-end Zirkulationskreislauf eines abzudichtenden rotierenden Bauteiles und ein einen Filter aufweisenden Kühlsystem umfasst,
**dadurch gekennzeichnet, dass**
im Zirkulationskreislauf ein die elektrische Leitfähigkeit des Dichtungsfluids erhöhendes Dosiermittel (4.1,7,8,9,11,12,13,14) angeordnet oder damit verbunden ist, so dass die elektrische Leitfähigkeit des Dichtungsfluids auf einen Wert im Bereich von 3 - 500 µS/cm einsgetellt ist.

2. Gleitringdichtungsanordnung nach Anspruch 1, **dadurch gekennzeichnet, dass** die elektrische Leitfähigkeit auf einen Bereich von 3 µS/cm bis 250 µS/cm eingestellt ist.

3. Gleitringdichtungsanordnung nach Anspruch 1 oder 2, **dadurch gekennzeichnet, dass** die elektrische Leitfähigkeit auf einen Bereich von 3 µS/cm bis 50 µS/cm eingestellt ist.

4. Gleitringdichtungsanordnung nach Anspruch 1, 2 oder 3, **dadurch gekennzeichnet, dass** das Dosiermittel in Form von ein oder mehreren leitfähigkeitsteigernden Salzdepots, Substanzen oder Flüssigkeiten in einer Aufnahme eines im Zirkulationskreislauf befindlichen Bauteiles angeordnet ist.

5. Gleitringdichtungsanordnung nach Anspruch 4, **dadurch gekennzeichnet, dass** die Aufnahme als ein Deckelteil (7) mit integrierten oder verbundenen Depotraum (8, 9, 12, 13) ausgebildet ist, wobei mindestens eine Abgabeöffnung (11) den Depotraum (8, 9, 12, 13) mit dem Zirkulationskreislauf verbindet.

6. Gleitringdichtungsanordnung nach Anspruch 4 oder 5, **dadurch gekennzeichnet, dass** eine osmotische Membran die Abgabemenge durch die Abgabeöffnung (10) steuert.

7. Gleitringdichtungsanordnung nach einem der Ansprüche 1 bis 6, **dadurch gekennzeichnet, dass** das Dosiermittel portionsweise in den Zirkulationskreislauf gelangt.

8. Gleitringdichtungsanordnung nach einem der Ansprüche 1 bis 7, **dadurch gekennzeichnet, dass** ein zwischen Depotraum (8, 9, 12, 13) und Zirkulationskreislauf angeordnetes Magnetventil (4.1) die Zugabe des Dosiermittels steuert.

9. Gleitringdichtungsanordnung nach einem der Ansprüche 1 bis 8, **dadurch gekennzeichnet, dass** der Depotraum (8, 9, 12, 13) als eine austauschbare Patrone ausgebildet ist.

10. Gleitringdichtungsanordnung nach einem der Ansprüche 1 bis 10, **dadurch gekennzeichnet, dass** eine Leitfähigkeitsmesseinrichtung (15) kontinuierlich oder periodisch die elektrische Leitfähigkeit ermittelt und steuert.

11. Gleitringdichtungsanordnung nach einem der Ansprüche 1 bis 10, **dadurch gekennzeichnet, dass** eine den Leckagestrom innerhalb oder außerhalb der Gleitringdichtungsanordnung erfassende Leitfähigkeitsmesseinrichtung (15) die elektrische Leitfähigkeit ermittelt.

12. Gleitringdichtungsanordnung nach einem der vorgenannten Ansprüche, **dadurch gekennzeichnet, dass** das Dosiermittel in Form einer Dosiermitteleinspeiseeinrichtung angeschlossen ist, deren Speisemenge in Abhängigkeit von einer Gleitringdichtungsleckage die elektrische Leitfähigkeit des Dichtungsfluids auf einen Wert im Bereich von 3 bis 500 µS/cm einstellt.

13. Gleitringdichtungsanordnung nach Anspruch 12 **dadurch gekennzeichnet, dass** ein Pufferspeicher (11.2), ein gesteuertes Ventil, insbesondere ein Magnetventil (4.1), und/oder eine Pumpe (11) das Dosiermitteleinspeisesystem bildet.

14. Gleitringdichtungsanordnung nach einem der Ansprüche 1 bis 13, **dadurch gekennzeichnet, dass** die Leitfähigkeitsmesseinrichtung (15) bei einem Überschreiten vorgegebener Messwerte einen Alarm auslöst.

## Claims

1. Slide ring seal arrangement for high circumferential velocities for the sealing of liquid fluids with low to no electrical conductivity, such as low-salt boiler feed water in the case of boiler feed water pumps or the like, having at least one pair of slide rings, of which one can be installed in a rotationally immovable manner and the other can be installed for common rotation with a rotating component, which slide rings have interacting slide faces which during operation form between them a sealing gap which seals a region of the slide ring seal arrangement which is pressurized by the fluid to be sealed in relation to a surrounding region, wherein one of the slide rings is formed basically from a material with good electrical conductivity and the other slide ring is formed basically from a material with low electrical conductivity, wherein the slide ring seal arrangement comprises a dead-end circulation circuit of a rotating component which is to be sealed and a cooling system which has a filter,
**characterized in that**
a dosing means (4.1, 7, 8, 9, 11, 12, 13, 14), which increases the electrical conductivity of the sealing fluid, is arranged in the circulation circuit, or connected thereto, such that the electrical conductivity of the sealing fluid is set to a value in the range of from 3 to 500 uS/cm.

2. Slide ring seal arrangement according to Claim 1, **characterized in that** the electrical conductivity is set to a range from 3 µS/cm to 250 uS/cm.

3. Slide ring seal arrangement according to Claim 1 or 2, **characterized in that** the electrical conductivity is set to a range from 3 µS/cm to 50 uS/cm.

4. Slide ring seal arrangement according to Claim 1, 2 or 3, **characterized in that** the dosing means, in the form of a conductivity-increasing salt reservoir, or a plurality of such, or substances or fluids, is arranged in a holder of a component which is located in the circulation circuit.

5. Slide ring seal arrangement according to Claim 4, **characterized in that** the holder is designed as a cover section (7) with integrated or connected salt reservoir (8, 9, 12, 13), wherein at least one discharge opening (10) connects the reservoir (8, 9, 12, 13) to the circulation circuit.

6. Slide ring seal arrangement according to Claim 4 or 5, **characterized in that** an osmotic membrane controls the discharge volume through the discharge opening (10).

7. Slide ring seal arrangement according to one of Claims 1 to 6, **characterized in that** the dosing medium finds its way into the circulation circuit in portions.

8. Slide ring seal arrangement according to one of Claims 1 to 7, **characterized in that** a magnetic valve (4.1), which is arranged between the reservoir (8, 9, 12, 13) and the circulation circuit, controls the addition of the dosing medium.

9. Slide ring seal arrangement according to one of Claims 1 to 8, **characterized in that** the reservoir (8, 9, 12, 13) is designed as an exchangeable cartridge.

10. Slide ring seal arrangement according to one of Claims 1 to 10, **characterized in that** a conductivity-measuring device (15) continuously or periodically determines and controls the electrical conductivity.

11. Slide ring seal arrangement according to one of Claims 1 to 10, **characterized in that**, a conductivity-measuring device (15), which detects the leakage flow inside or outside the slide ring seal arrangement, determines the electrical conductivity.

12. Slide ring seal arrangement according to one of the preceding claims, **characterized in that** the dosing means is connected in the form of a dosing-medium feed device, the feed volume of which sets the electrical conductivity of the sealing fluid to a value in the range from 3 to 500 µS/cm as a function of a slide ring seal leakage.

13. Slide ring seal arrangement according to Claim 12, **characterized in that** a buffer accumulator (11.2), a controlled valve, especially a magnetic valve (4.1), and/or a pump (11) forms the dosing-medium feed system.

14. Slide ring seal arrangement according to one of Claims 1 to 13, **characterized in that** the conductivity-measuring device (15) triggers an alarm in the event of a predetermined measured value being exceeded.

## Revendications

1. Ensemble d'étanchéité à bagues de glissement pour vitesses périphériques élevées pour réaliser l'étanchéité de fluides coulants de conductivité électrique faible à nulle, comme de l'eau d'alimentation de chaudière à faible teneur en sels dans des pompes d'alimentation en eau de chaudière ou similaires, comprenant au moins une paire de bagues de glissement dont l'une peut être montée de manière non rotative et l'autre peut être montée de manière solidaire en rotation avec un composant rotatif, lesquelles présentent des surfaces de glissement coopérantes qui, pendant le fonctionnement, forment entre elles une région de l'ensemble d'étanchéité à bagues de glissement pouvant être sollicitée par le fluide à étanchéifier par rapport à une fente d'étanchéité réalisant l'étanchéité d'une région environnante, l'une des bagues de glissement étant formée essentiellement d'un matériau ayant une bonne conductivité électrique et l'autre bague d'étanchéité étant formée essentiellement d'un matériau ayant une faible conductivité électrique, l'ensemble d'étanchéité à bagues de glissement comprenant un circuit de circulation en cul-de-sac d'un composant rotatif à étanchéifier et un système de refroidissement présentant un filtre, **caractérisé en ce qu'**un moyen de dosage (4.1, 7, 8, 9, 11, 12, 13, 14) augmentant la conductivité électrique du fluide à étanchéifier est disposé dans le circuit de circulation ou est connecté à celui-ci de telle sorte que la conductivité électrique du fluide à étanchéifier soit ajustée à une valeur dans une plage de 3 - 500 µs/cm.

2. Ensemble d'étanchéité à bagues de glissement selon la revendication 1, **caractérisé en ce que** la conductivité électrique est ajustée à une plage de 3 µs/cm à 250 µs/cm.

3. Ensemble d'étanchéité à bagues de glissement selon la revendication 1 ou 2, **caractérisé en ce que** la conductivité électrique est ajustée à une plage de 3 µs/cm à 50 µs/cm.

4. Ensemble d'étanchéité à bagues de glissement selon la revendication 1, 2 ou 3, **caractérisé en ce que** le moyen de dosage est disposé sous la forme d'un ou de plusieurs dépôts de sel, substances ou liquides augmentant la conductivité dans un logement d'un composant se trouvant dans le circuit de circulation.

5. Ensemble d'étanchéité à bagues de glissement selon la revendication 4, **caractérisé en ce que** le logement est réalisé sous la forme d'une partie de couvercle (7) avec un espace de dépôt intégré ou associé (8, 9, 12, 13), au moins une ouverture de distribution (10) reliant l'espace de dépôt (8, 9, 12, 13) au circuit de circulation.

6. Ensemble d'étanchéité à bagues de glissement selon la revendication 4 ou 5, **caractérisé en ce qu'**une membrane osmotique commande la quantité délivrée à travers l'ouverture de distribution (10).

7. Ensemble d'étanchéité à bagues de glissement selon l'une quelconque des revendications 1 à 6, **caractérisé en ce que** le moyen de dosage parvient par portions dans le circuit de circulation.

8. Ensemble d'étanchéité à bagues de glissement selon l'une quelconque des revendications 1 à 7, **caractérisé en ce qu'**une électrovanne (4.1) disposée entre l'espace de dépôt (8, 9, 12, 13) et le circuit de circulation commande l'ajout du moyen de dosage.

9. Ensemble d'étanchéité à bagues de glissement selon l'une quelconque des revendications 1 à 8, **caractérisé en ce que** l'espace de dépôt (8, 9, 12, 13) est réalisé sous forme de cartouche remplaçable.

10. Ensemble d'étanchéité à bagues de glissement selon l'une quelconque des revendications 1 à 10, **caractérisé en ce qu'**un dispositif de mesure de la conductivité (15) détecte et commande en continu ou de manière périodique la conductivité électrique.

11. Ensemble d'étanchéité à bagues de glissement selon l'une quelconque des revendications 1 à 10, **caractérisé en ce qu'**un dispositif de mesure de la conductivité (15) détectant le courant de fuite à l'intérieur ou à l'extérieur de l'ensemble d'étanchéité à bagues de glissement détecte la conductivité électrique.

12. Ensemble d'étanchéité à bagues de glissement selon l'une quelconque des revendications précédentes, **caractérisé en ce que** le moyen de dosage est raccordé sous la forme d'un dispositif d'alimentation en moyen de dosage, dont la quantité introduite ajuste, en fonction d'une fuite dans le joint d'étanchéité à bagues de glissement, la conductivité électrique du fluide à étanchéifier à une valeur comprise dans la plage de 3 à 500 µs/cm.

13. Ensemble d'étanchéité à bagues de glissement selon la revendication 12, **caractérisé en ce qu'**un accumulateur tampon (11.2) forme une soupape commandée, en particulier une électrovanne (4.1), et/ou une pompe (11) forme le système d'alimentation en moyen de dosage.

14. Ensemble d'étanchéité à bagues de glissement selon l'une quelconque des revendications 1 à 13, **caractérisé en ce que** le dispositif de mesure de conductivité (15) déclenche une alarme dans le cas d'un dépassement de valeurs de mesure prédéfinies.
